# EUROPEAN PATENT APPLICATION

(11) **EP 4 329 312 A1**
(43) Date of publication of application: **28.02.2024**
(21) Application number: 22819566.5
(22) Date of filing: 08.06.2022
(51) Int. Cl.: H04N 19/96, G06T 9/00

(54) **POINT CLOUD CODING METHOD, DECODING METHOD, AND RELATED DEVICE**

(30) Priority: 11.06.2021 CN 202110654047
(71) Applicant: Vivo Mobile Communication Co., Ltd., Dongguan, Guangdong 523863 (CN)
(72) Inventor: ZHANG, Wei, Dongguan, Guangdong 523863 (CN); NIE, Jiaming, Dongguan, Guangdong 523863 (CN); LV, Zhuoyi, Dongguan, Guangdong 523863 (CN); YANG, Fuzheng, Dongguan, Guangdong 523863 (CN)
(74) Representative: Murgitroyd & Company
(86) International application number: PCT/CN2022/097633
(87) International publication number: WO 2022/257969

(57) **Abstract**

This application discloses a point cloud encoding processing method and decoding processing method, and related devices. The point cloud encoding processing method of embodiments of this application includes: obtaining a current to-be-encoded node in a target queue, where the target queue includes an occupied node in a space block corresponding to a constructed tree structure based on first geometric information, the first geometric information is obtained by preprocessing based on geometric information of a to-be-encoded N-th frame point cloud, and N is an integer greater than 1; and determining an encoding mode of the current to-be-encoded node based on whether the current to-be-encoded node meets an encoding condition of an isolated point. The encoding condition of the isolated point includes: An occupancy status of a target node meets a preset condition. The target node is a node that is in encoded nodes and that is associated with the current to-be-encoded node.

## Description

### CROSS-REFERENCE TO RELATED APPLICATION

This application claims priority to Chinese Patent Application No. 202110654047.X filed in China on June 11, 2021, which is incorporated herein by reference in its entirety.

### TECHNICAL FIELD

This application relates to the field of point cloud processing technologies, and in particular, to a point cloud encoding processing method and decoding processing method, and related devices.

### BACKGROUND

In a point cloud digital audio video coding standard (Audio Video coding Standard, AVS) encoder framework, it is usually necessary to configure, for a to-be-encoded node that satisfies an encoding condition of an isolated point, an isolated node flag used to characterize whether the to-be-encoded node is a real isolated node, and encode the isolated node flag. However, in a current encoding condition of an isolated point, there is only a restriction that a to-be-encoded node close to a bottom layer does not meet the encoding condition of the isolated point. This leads to a case that isolated node flags need to be configured for more to-be-encoded nodes, resulting in a large bitstream of encoding.

### SUMMARY

Embodiments of this application provides a point cloud encoding processing method and decoding processing method, and related devices, which can resolve a problem of a large bitstream of encoding in conventional technologies caused by configuring too much isolated node flags.

According to a first aspect, a point cloud encoding processing method is provided, including:
obtaining a current to-be-encoded node in a target queue, where the target queue includes an occupied node in a space block corresponding to a constructed tree structure based on first geometric information, the first geometric information is obtained by preprocessing based on geometric information of a to-be-encoded N-th frame point cloud, and N is an integer greater than 1; and
determining an encoding mode of the current to-be-encoded node based on whether the current to-be-encoded node meets an encoding condition of an isolated point.

The encoding condition of the isolated point includes: An occupancy status of a target node meets a preset condition. The target node is a node that is in encoded nodes and that is associated with the current to-be-encoded node.

According to a second aspect, a point cloud decoding processing method is provided, including:
obtaining a current to-be-decoded node in a target queue, where the target queue includes an occupied node in a space block corresponding to a constructed tree structure based on first geometric information, the first geometric information is geometric information corresponding to decoded nodes of a to-be-decoded N-th frame point cloud, and N is an integer greater than 1; and
determining a decoding mode of the current to-be-decoded node based on whether the current to-be-decoded node meets a decoding condition of an isolated point.

The decoding condition of the isolated point includes: An occupancy status of a target node meets a preset condition. The target node is a node that is in the decoded nodes and that is associated with the current to-be-decoded node.

According to a third aspect, a point cloud encoding processing apparatus is provided, including:
a first obtaining module, configured to obtain a current to-be-encoded node in a target queue, where the target queue includes an occupied node in a space block corresponding to a constructed tree structure based on first geometric information, the first geometric information is obtained by preprocessing based on geometric information of a to-be-encoded N-th frame point cloud, and N is an integer greater than 1; and
a first determining module, configured to determine, based on whether the current to-be-encoded node meets an encoding condition of an isolated point, an encoding mode of the current to-be-encoded node.

The encoding condition of the isolated point includes: An occupancy status of a target node meets a preset condition. The target node is a node that is in encoded nodes and that is associated with the current to-be-encoded node.

According to a fourth aspect, a point cloud decoding processing apparatus is provided, including:
a second obtaining module, configured to obtain a current to-be-decoded node in a target queue, where the target queue includes an occupied node in a space block corresponding to a constructed tree structure based on first geometric information, the first geometric information is geometric information corresponding to decoded nodes of a to-be-decoded N-th frame point cloud, and N is an integer greater than 1; and
a second determining module, configured to determine, based on whether the current to-be-decoded node meets a decoding condition of an isolated point, a decoding mode of the current to-be-decoded node.

The decoding condition of the isolated point includes: An occupancy status of a target node meets a preset condition. The target node is a node that is in the decoded nodes and that is associated with the current to-be-decoded node.

According to a fifth aspect, a terminal is provided. The terminal includes a processor, a memory, and a program or instructions stored in the memory and executable on the processor. When the program or the instructions are executed by the processor, steps of the method according to the first aspect are implemented.

According to a six aspect, a terminal is provided, including a processor and a communication interface.

The processor is configured to perform the following operations: obtaining a current to-be-encoded node in a target queue, where the target queue includes an occupied node in a space block corresponding to a constructed tree structure based on first geometric information, the first geometric information is obtained by preprocessing based on geometric information of a to-be-encoded N-th frame point cloud, and N is an integer greater than 1; and determining an encoding mode of the current to-be-encoded node based on whether the current to-be-encoded node meets an encoding condition of an isolated point. The encoding condition of the isolated point includes: An occupancy status of a target node meets a preset condition. The target node is a node that is in encoded nodes and that is associated with the current to-be-encoded node.

Alternatively, the processor is configured to perform the following operations: obtaining a current to-be-decoded node in a target queue, where the target queue includes an occupied node in a space block corresponding to a constructed tree structure based on first geometric information, the first geometric information is geometric information corresponding to decoded nodes of a to-be-decoded N-th frame point cloud, and N is an integer greater than 1; and determining a decoding mode of the current to-be-decoded node based on whether the current to-be-decoded node meets a decoding condition of an isolated point. The decoding condition of the isolated point includes: An occupancy status of a target node meets a preset condition. The target node is a node that is in the decoded nodes and that is associated with the current to-be-decoded node.

According to a seventh aspect, a readable storage medium is provided. The readable storage medium stores a program or instructions. When the program or the instructions are executed by a processor, steps in the method according to the first aspect are implemented, or steps in the method according to the second aspect are implemented.

According to an eighth aspect, an embodiment of this application provides a chip. The chip includes a processor and a communication interface. The communication interface is coupled to the processor. The processor is configured to run a program or instructions to implement steps in the method according to the first aspect, or steps in the method according to the second aspect.

According to a ninth aspect, a computer program product is provided. The computer program product is stored in a non-transient storage medium. The computer program product is executed by at least one processor to implement the method according to the first aspect, or the method according to the second aspect.

According to a tenth aspect, a communication device is provided and configured to implement the method according to the first aspect, or the method according to the second aspect.

In the embodiments of this application, the current to-be-encoded node is obtained in the target queue. The target queue includes the occupied node in the space block corresponding to the constructed tree structure based on the first geometric information. The first geometric information is obtained by preprocessing based on the geometric information of the to-be-encoded N-th frame point cloud. N is an integer greater than 1. The encoding mode of the current to-be-encoded node is determined based on whether the current to-be-encoded node meets the encoding condition of the isolated point. The encoding condition of the isolated point includes: The occupancy status of the target node meets the preset condition. The target node is the node that is in the encoded nodes and that is associated with the current to-be-encoded node. In this way, a ratio of real isolated nodes entering the encoding mode of the isolated point may be increased based on occupancy status of nodes corresponding to a reconstructed point cloud of an encoded frame, so that nodes that enter the encoding mode of the isolated point can be reduced, thereby reducing a quantity of flags of isolated nodes that need to be encoded. Therefore, a bitstream of encoding can be reduced in the embodiments of this application.

### BRIEF DESCRIPTION OF THE DRAWINGS

FIG. 1 is a schematic diagram of a point cloud AVS encoder framework according to an embodiment of this application;
FIG. 2 is a schematic diagram of a point cloud AVS decoder framework according to an embodiment of this application;
FIG. 3 is a schematic diagram of an inter-frame encoding framework according to an embodiment of this application;
FIG. 4 is a flowchart of a point cloud encoding processing method according to an embodiment of this application;
FIG. 5 is a schematic diagram of a processing procedure of octree encoding;
FIG. 6 is a flowchart of a point cloud decoding processing method according to an embodiment of this application;
FIG. 7 is a diagram of a structure of a point cloud encoding processing apparatus according to an embodiment of this application;
FIG. 8 is a diagram of a structure of a point cloud decoding processing apparatus according to an embodiment of this application;
FIG. 9 is a diagram of a structure of a communication device according to an embodiment of this application; and
FIG. 10 is a diagram of a structure of a communication device according to an embodiment of this application.

### DETAILED DESCRIPTION

The following clearly describes technical solutions in the embodiments of this application are clearly described with reference to the accompanying drawings in the embodiments of this application. Apparently, the described embodiments are some rather than all of the embodiments of this application. All other embodiments obtained by a person of ordinary skills in the art based on embodiments of this application fall within the protection scope of this application.

In the specification and claims of this application, the terms "first" and "second" are used to distinguish between similar objects instead of describing a specific order or sequence. It should be understood that data used in this way is interchangeable in proper circumstances, so that the embodiments of this application can be implemented in another order than the order illustrated or described herein. In addition, objects distinguished by "first" and "second" are usually of one type, and the quantity of the objects is not limited. For example, there may be one or more first objects. In addition, "and/or" used in the specification and claims represents at least one of connected objects. The character "/" generally represents an "or" relationship between the associated objects.

An encoding and decoding side corresponding to an encoding and decoding method in embodiments of this application may be a terminal. The terminal may also be referred to as a terminal device or user equipment (User Equipment, UE). The terminal may be a terminal-side device, such as a mobile phone, a tablet computer (Tablet Personal Computer), a laptop computer (Laptop Computer) or referred to as a notebook, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device) or vehicle user equipment (Vehicle User Equipment, VUE), and pedestrian user equipment (Pedestrian User Equipment, PUE). The wearable device include: a smartwatch, a wristband, a headset, glasses, and the like. It should be noted that, a specific type of the terminal is not limited in the embodiments of this application.

For ease of understanding, the following describes some of the content in the embodiments of this application:

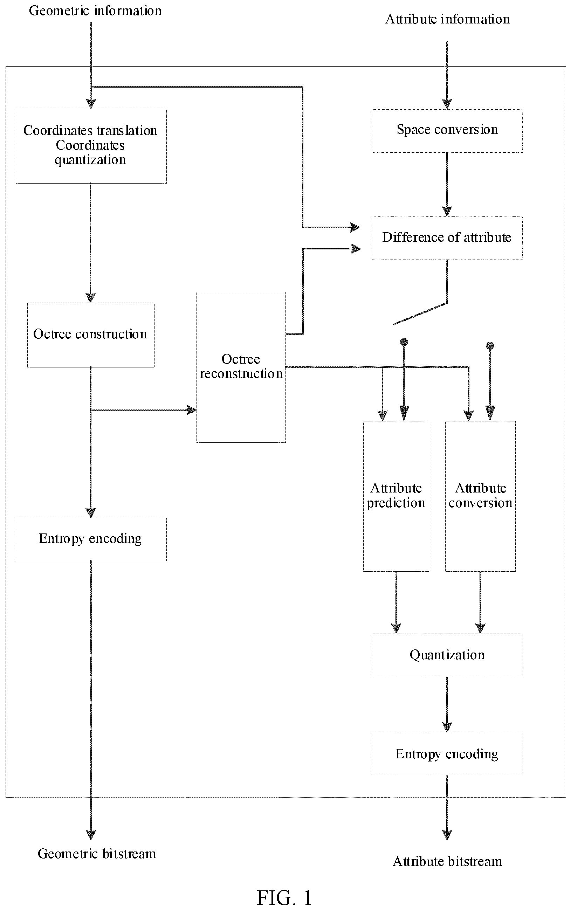

As shown in FIG. 1, in a point cloud AVS encoder framework, geometric information and attribute information of a point cloud are encoded separately. Coordinates transformation is first performed on the geometric information, so that point clouds are all included in a bounding box (bounding box), and then coordinates quantization is performed. The quantization mainly plays a role of scaling. Because the quantization rounds geometric coordinates, geometric information of a part of points is the same, and the points are referred to as duplicate points. Whether to remove the duplicate points is determined based on a parameter. The two steps of quantization and removing the duplicate points are also referred as to a voxelization process. Next, multi-branch tree partition such as octree partition, quadtree partition, and binary tree partition, is performed on the bounding box. In a geometric information encoding framework based on the multi-branch tree, the bounding box is equally partitioned into eight sub-cubes. Partition of non-empty sub-cubes continues until a unit cube with leaf nodes of 1x1x1 is obtained. A point number in the leaf nodes is encoded to generate a binary bitstream. Current AVS geometric partition orders include the following two types:
1. A breadth-first traversal order: When octree partition is performed on geometry, nodes at a current same layer are first partitioned. Only after all nodes on the current layer are partitioned, nodes of a next layer continue to be partitioned. When leaf nodes obtained by the partition are a 1x1x1 unit cube, the partition is ultimately stopped.
2. A depth-first traversal order: When octree partition is performed on geometry, a first node at a current layer is first partitioned continuously. After leaf nodes obtained by the partition is a 1x1x1 unit cube, the partition on the current node is stopped. According to the order, subsequent nodes at the current layer are partitioned until the partition on the nodes at the current layer is completed.

After geometric encoding is completed, geometric information is reconstructed for later recoloring. Attribute encoding is mainly for color and reflectivity information. It is determined, based on a parameter, whether color space conversion is performed. If the color space conversion is performed, color information is converted from red green blue (Red Green Blue, RGB) color space into luma and chroma (YUV) color space. Then, a geometric reconstructed point cloud is recolored by using an original point cloud, so that unencoded attribute information corresponds to reconstructed geometric information. In color information encoding, after a point cloud is sorted by using a Morton code, a nearest neighbor of a to-be-predicted point is searched by using a geometric space relationship, and prediction is performed on the to-be-predicted point by using a reconstructed attribute value of the found neighbor to obtain a predicted attribute value. Then an actual attribute value and the predicted attribute value are differentiated to obtain a prediction residual. Finally, the prediction residual is quantized and encoded to generate a binary bitstream.

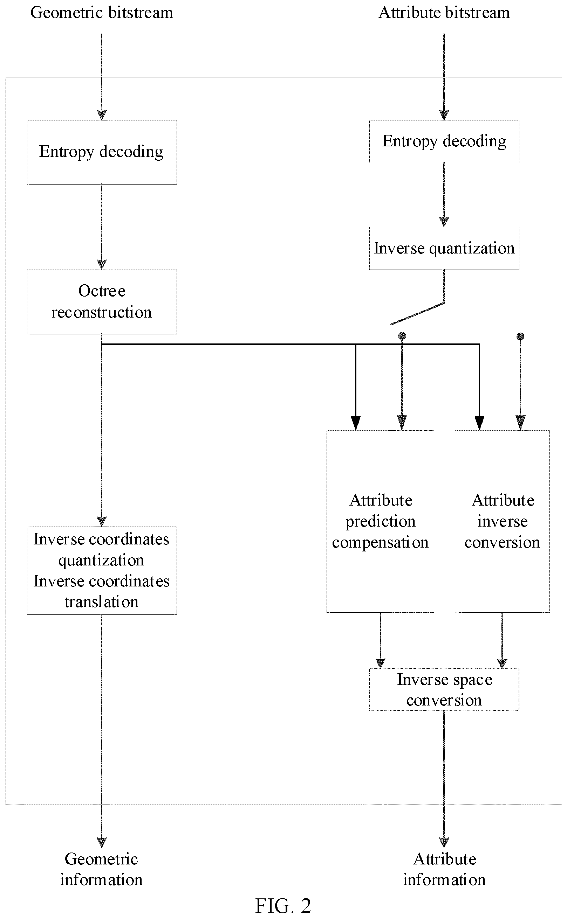

Optionally, an AVS decoding process corresponds to the encoding process. Specifically, an AVS decoder framework is shown in FIG. 2.

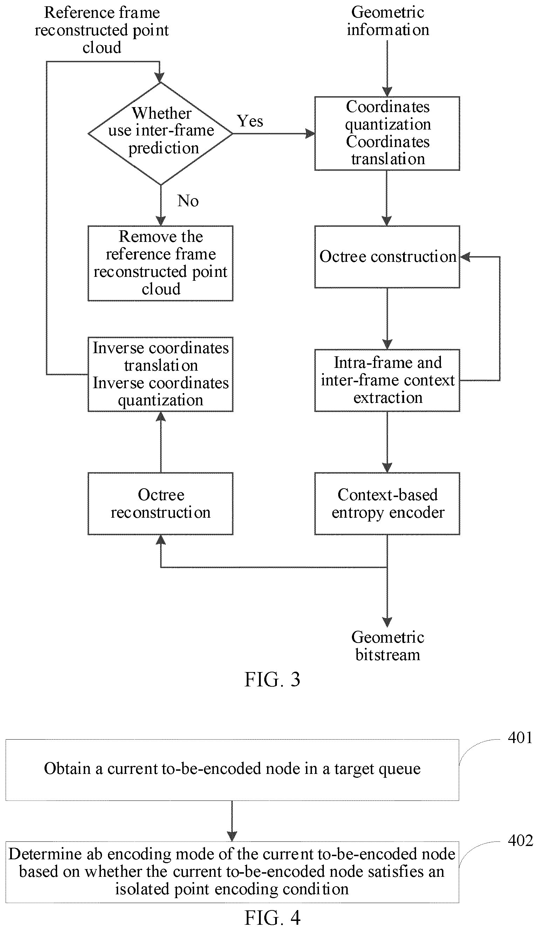

An AVS explore model (Explore model, EM) provides an inter-frame encoding framework based on the foregoing intra-frame encoding framework, as shown in FIG. 3. A specific encoding process is as follows:

Two frame types are set: an I frame and a P frame. A first frame of each sequence is an I frame, and only intra-frame prediction is used. All subsequent frames are P frames, on which forward inter-frame prediction is performed, and a previous frame is used as a reference frame. In addition, an inter-frame flag bit (interMode) is added and used to control whether to use an inter-frame prediction tool.

A current to-be-encoded frame is input, and a previous frame encoded point cloud is used as a reference frame. Synchronization tree partition is performed on the two frames, and a node at a corresponding location in the reference frame is used as a prediction block. Occupancy information of the prediction block is used as a context for improving entropy encoding efficiency of an occupancy code of a to-be-encoded block.

A same sub-block partition as that performed on a current to-be-encoded block is performed on the obtained prediction block, to respectively obtain occupancy code information of the prediction block and the current to-be-encoded block.

Optionally, a decoding process corresponds to the encoding process. Details are not described herein again.

The following describes a point cloud encoding processing method according to an embodiment of this application in detail by using some embodiments and application scenarios with reference to the accompanying drawings.

Refer to FIG. 4. FIG. 4 is a flowchart of a point cloud encoding processing method according to an embodiment of this application. As shown in FIG. 4, the method includes the following steps:

Step 401: Obtain a current to-be-encoded node in a target queue. The target queue includes an occupied node in a space block corresponding to a constructed tree structure based on first geometric information. The first geometric information is obtained by preprocessing based on geometric information of a to-be-encoded N-th frame point cloud. N is an integer greater than 1.

In the embodiment of this application, when the first geometric information is encoded, a root node may be first determined and stored in a first node queue. It should be understood that the root node corresponds a bounding box, and includes all points of the first geometric information. Then tree structure partition is performed on the root node to obtain subnodes. An occupied subnodes is stored in the first node queue based on an occupancy status of the subnode. In this case, the occupied subnode may be placed after a last node in the first node queue, or after a node on which the structure tree partition is currently performed. When encoding is performed, nodes of the first node queue may be sequentially traversed to be used as a current to-be-encoded node for an encoding operation.

Step 402: Determine an encoding mode of the current to-be-encoded node based on whether the current to-be-encoded node meets an encoding condition of an isolated point.

The encoding condition of the isolated point includes: An occupancy status of a target node meets a preset condition. The target node is a node that is in encoded nodes and that is associated with the current to-be-encoded node.

In the embodiment of this application, the encoding mode of the current to-be-encoded node includes an encoding mode of the isolated point or an encoding mode of an occupancy code. In a case that the current to-be-encoded node meets the encoding condition of the isolated point, the encoding mode of the current to-be-encoded node is the isolated point encoding mode. In a case that the current to-be-encoded node does not meet the encoding condition of the isolated point, the encoding mode of the current to-be-encoded node is the encoding mode of the occupancy code.

It should be noted that, in the embodiment of this application, that the occupancy status of the target node meets the preset condition is set as a part of the encoding condition of the isolated point, so that it can be determined, based on sparsity of nodes in second geometric information, whether a current node meets the encoding condition of the isolated point. For example, if a node corresponding to a reference frame reconstructed point cloud is sparse, the current frame node is also highly likely to be sparse. Therefore, a probability of the node being an isolated point is high. After entering the isolated point encoding mode, each node that enters the encoding mode of the isolated point needs to be encoded on a flag bit (singleNodeFlag) to determine whether it is a real isolated node. For example, the singleNodeFlag=1 may be used to indicate that the current to-be-encoded node is a real isolated node, and the singleNodeFlag=0 may be used to indicate that the current to-be-encoded node is a non-isolated node. Occupancy modes of a node that is at a location in an encoded point cloud frame corresponding to the current node and a neighboring node of the node are used to determine whether a node of the current frame node that enters the encoding mode of the isolated point has a high probability of being a real isolated point. The probability of the node that enters the isolated point encoding to be a real isolated point is increased to reduce a quantity of encoded singleNodeFlag=0, and a quantity of singleNodeFlag=1 is almost unchanged. Therefore, in the embodiment of this application, encoding data of the singleNodeFlag can be reduced, so that a bitstream of encoding can be reduced.

In the embodiment of this application, the current to-be-encoded node is obtained in the target queue. The target queue includes the occupied node in the space block corresponding to the constructed tree structure based on the first geometric information. The first geometric information is obtained by preprocessing based on the geometric information of the to-be-encoded N-th frame point cloud. N is an integer greater than 1. The encoding mode of the current to-be-encoded node is determined based on whether the current to-be-encoded node meets the encoding condition of the isolated point. The encoding condition of the isolated point includes: The occupancy status of the target node meets the preset condition. The target node is the node that is in the encoded nodes and that is associated with the current to-be-encoded node. In this way, a ratio of real isolated nodes performing the encoding mode of the isolated point may be increased based on occupancy status of nodes corresponding to a reconstructed point cloud of an encoded frame, so that nodes that enter the encoding mode of the isolated point may be reduced, thereby reducing a quantity of flags of isolated nodes that need to be encoded. Therefore, a bitstream of encoding can be reduced in the embodiments of this application.

It should be noted that, in the embodiment of this application, synchronization tree structure partition may be performed on the first geometric information and the second geometric information, to obtain nodes in the tree structure corresponding to the first geometric information and nodes in a tree structure corresponding to the second geometric information.

That the synchronization tree partition is performed on the first geometric information and the second geometric information may be understood as that, when the tree structure partition is performed on the second geometric information, synchronization partition is performed with reference to the tree structure of the first geometric information. In other words, whether a specific node in the tree structure corresponding to the second geometric information is partitioned into subnodes needs to be synchronized with a corresponding node of the tree structure corresponding to the first geometric information. It should be understood that, in the embodiment of this application, the tree structure partition may be understood as multi-branch tree structure partition such as octree partition, quadtree partition, and binary tree partition.

Optionally, the foregoing reference frame point cloud is at least one encoded frame point cloud. Specifically, after encoding on each frame point cloud is completed, geometric information may be reconstructed to obtain reconstructed geometric information, and a memory is allocated to store the reconstructed geometric information corresponding to each encoded frame point cloud. After a reference frame point cloud corresponding to the N-th frame point cloud is determined, the geometric information of the N-th frame point cloud may be preprocessed to obtain the first geometric information.

Optionally, in some embodiments, the target node includes at least one of the following:
a subnode of a first node, where the first node is a node that is in the tree structure corresponding to the second geometric information and that corresponds to the current to-be-encoded node, and the second geometric information is reconstructed geometric information of the reference frame point cloud corresponding to the N-th frame point cloud;
a neighboring node of the first node; and
a subnode of the neighboring node of the first node.

In the embodiment of this application, the synchronization tree partition is performed on the current to-be-encoded node and the first node before or after determining whether the current to-be-encoded node meets the encoding condition of the isolated point. It should be noted that, if the synchronization tree partition is performed on the current to-be-encoded node and the first node before determining whether the current to-be-encoded node meets the encoding condition of the isolated point, occupancy status of the subnode of the first node may be obtained. In this case, the target node may include the subnode of the first node. If the synchronization tree partition is performed on the current to-be-encoded node and the first node after determining whether the current to-be-encoded node meets the encoding condition of the isolated point, the occupancy status of the subnode of the first node may not be obtained.

Optionally, in some embodiments, the neighboring node of the first node includes at least one of the following:
a node at a same layer as the first node; and
a subnode of a node that is at a same layer as and that corresponds to a parent node of the first node.

Optionally, that the occupancy status of the target node meets the preset condition includes at least one of the following that:
a quantity of target nodes that are occupied is less than a first threshold; and
a quantity of points that are in second geometric information and that are located in a space block corresponding to the target node is less than a second threshold. The second geometric information is reconstructed geometric information of a reference frame point cloud corresponding to the N-th frame point cloud.

In the embodiment of this application, it may be determined, based on the quantity of the target node that is occupied, whether the current node meets the encoding condition of the isolated point, or determined, based on the quantity of the points that are in the second geometric information and that are located in the space block corresponding to the target node, whether the current node meets the encoding condition of the isolated point, or may be determined in a combined manner.

Optionally, in some embodiments, the encoding condition of the isolated point further includes that:

A direct encoding identifier of geometric header information corresponding to the N-th frame point cloud is a preset value.

In a case that side lengths that are in L directions and that are of a space block corresponding to the current to-be-encoded node are greater than a preset minimum side length, a sum of to-be-encoded Morton code bits of a target point is greater than preset times of L. The target point includes a point that is in the first geometric information and that is located in the space block corresponding to the current to-be-encoded node. L is a natural number.

In the embodiment of this application, the foregoing preset times may be 2. The foregoing preset value may be set based on actual needs. This is not further limited herein.

Optionally, in some embodiments, in a case that the encoding mode of the current to-be-encoded node is the isolated point encoding mode, the method further includes:
performing occupancy code encoding in a case that the current to-be-encoded node is a non-isolated node; and
performing isolated point encoding in a case that the current to-be-encoded node is an isolated node.

In the embodiment of this application, the performing the occupancy encoding may be understood as that an occupancy code of the current to-be-encoded node may be encoded by using context-based adaptive binary arithmetic coding (Context-based Adaptive Binary Arithmetic Coding, CABAC). A manner of the isolated point encoding may refer to related technologies. Details are not described herein again.

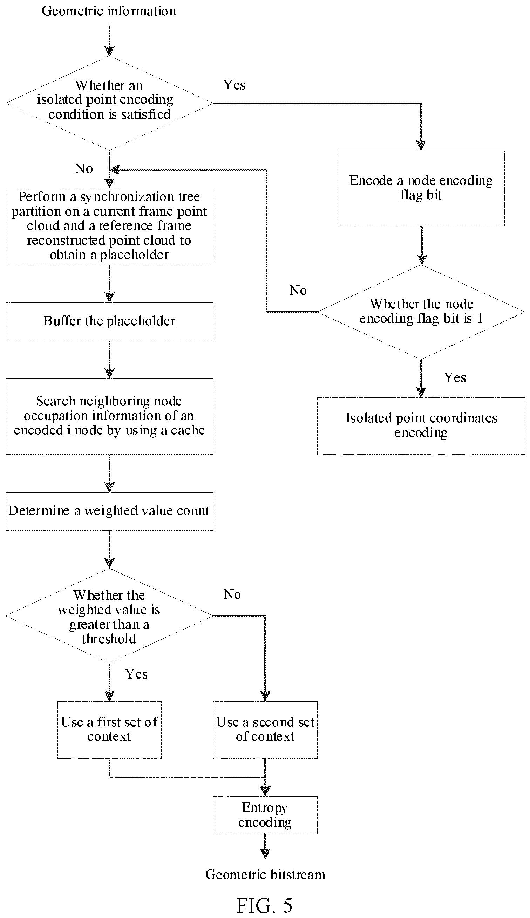

For better understanding of this application, specific examples are used for detailed description. A part of memory is first allocated to store the reconstructed point cloud of the encoded frame as a reference frame reconstructed point cloud of a current frame point cloud, which is denoted as pointcloudPred. As shown in FIG. 5, a processing procedure of octree encoding is as follows:
1. The current frame point cloud (pointcloud) is quantized to obtain a current frame quantized point cloud, which is denoted as pointcloudQua.
2. Octree partition is separated performed on the current frame quantized point cloud and the reference frame reconstructed point cloud to obtain occupancy codes of the octree, which are respectively denoted as an occupancy code (occupancy) and a reconstructed occupancy code (occupancyPred). Each bit of eight occupancy codes are respectively denoted as Oi and OPi, and i=0...7. In addition, the eight occupancy codes of the current point cloud and the reference point cloud are cached in a hash table for facilitating searching for neighbor information for the node later.
3. It is determined whether the current node meets the encoding condition of the isolated point. If the encoding condition of the isolated point is satisfied, it is determined whether the node is a real isolated point. If the node is an isolated point, an isolated point flag singleNodeFlag=1 is encoded, and coordinates of the isolated point are encoded. Otherwise, a flag singleNodeFlag=0 is encoded, to perform the occupancy code encoding. Optionally, the encoding condition of the isolated point includes the following conditions:

An occupancy status of a target node meets a preset condition. The target node is a node that is in encoded nodes and that is associated with the current to-be-encoded node.

A direct encoding identifier of geometric header information corresponding to the N-th frame point cloud is a preset value.

In a case that side lengths that are in L directions and that are of a space block corresponding to the current to-be-encoded node are greater than a preset minimum side length, a sum of to-be-encoded Morton code bits of a target point is greater than preset times of L. The target point includes a point that is in the first geometric information and that is located in the space block corresponding to the current to-be-encoded node. L is a natural number.

4. Occupancy modes of 26 neighboring nodes or an occupancy mode of a subset of 26 neighboring nodes that are coplanar, collinear, and co-pointed and that are of a subnode corresponding to a reference frame are searched in the hash table cache, and quantities of the subnode corresponding to the reference frame and the neighboring nodes that are occupied are weighted. Assuming that a weight of the subnodes corresponding to the reference frame is Wcur, a weight of the coplanar neighboring nodes of the subnode corresponding to the reference frame is Wf, a weight of the collinear neighboring nodes of the subnode corresponding to the reference frame is Wl, and a weight of the co-pointed neighboring nodes of the subnode corresponding to the reference frame is Wp, then a weighted value count=OCcur*Wcur+OCf*Wf+OCl*W1 ++OCp*Wp can be obtained. OC represents the quantity of the subnode that is occupied and that corresponds to the reference frame. OCf represents the quantity of the coplanar neighboring nodes that are occupied and that are of the subnode corresponding to the reference frame. OCl represents the quantity of the collinear neighboring nodes that are occupied and that are of the subnode corresponding to the reference frame. OCp represents the quantity of the co-pointed neighboring nodes that are occupied and that are of the subnode corresponding to the reference frame. In addition, Wcur ≥ Wf ≥ Wl > Wp. The count and a threshold (Threshold, TH) are compared. Both the weight and the threshold may be adjusted. The subnode corresponding to the reference frame may be understood as a node that is in nodes corresponding to the reference frame reconstructed point cloud and that corresponds to a subnode currently undergoing entropy encoding.

5. If count > TH, a first set of context is used to perform the entropy encoding. Otherwise, a second set of context is used to perform the entropy encoding. The first set of context may be designed by using an occupancy code of a neighboring node of an inter-frame corresponding node, and the second set of context may be an intra-frame context.

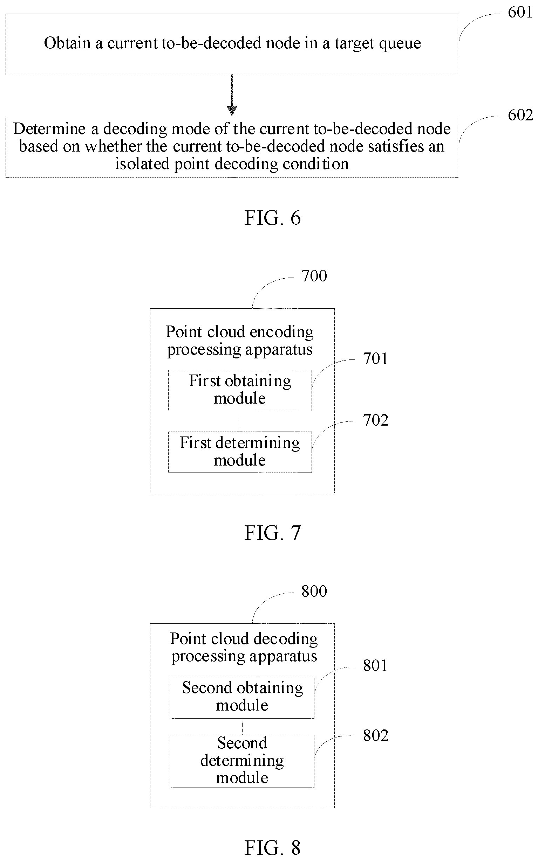

Refer to FIG. 6. FIG. 6 is a flowchart of a point cloud decoding processing method according to an embodiment of this application. As shown in FIG. 6, the method includes the following steps:
Step 601: Obtain a current to-be-decoded node in a target queue. The target queue includes an occupied node in a space block corresponding to a constructed tree structure based on first geometric information. The first geometric information is geometric information corresponding to decoded nodes of a to-be-decoded N-th frame point cloud. N is an integer greater than 1.
Step 602: Determine a decoding mode of the current to-be-decoded node based on whether the current to-be-decoded node meets decoding condition of an isolated point.

The decoding condition of the isolated point includes: An occupancy status of a target node meets a preset condition. The target node is a node that is in the decoded nodes and that is associated with the current to-be-decoded node.

It should be understood that, in the embodiment of this application, the first geometric information may be obtained based on a geometric bitstream corresponding to the N-th frame point cloud by using entropy decoding and multi-branch tree reconstruction.

Optionally, the target node includes at least one of the following:
a subnode of a first node, where the first node is a node that is in a tree structure corresponding to second geometric information and that corresponds to the current to-be-decoded node, and the second geometric information is reconstructed geometric information of a reference frame point cloud corresponding to the N-th frame point cloud;
a neighboring node of the first node; and
a subnode of the neighboring node of the first node.

Optionally, the neighboring node of the first node includes at least one of the following:
a node at a same layer as the first node; and
a subnode of a node that is at a same layer as and that corresponds to a parent node of the first node.

Optionally, that the occupancy status of the target node meets the preset condition includes at least one of the following that:
a quantity of target nodes that are occupied is less than a first threshold; and
a quantity of points that are in second geometric information and that are located in a space block corresponding to the target node is less than a second threshold. The second geometric information is reconstructed geometric information of a reference frame point cloud corresponding to the N-th frame point cloud.

Optionally, the decoding condition of the isolated point further includes that:
A direct decoding identifier of geometric header information corresponding to the N-th frame point cloud is a preset value.

In a case that side lengths that are in L directions and that are of a space block corresponding to the current to-be-decoded node are greater than a preset minimum side length, a sum of to-be-decoded Morton code bits of a target point is greater than preset times of L. The target point includes a point that is in the first geometric information and that is located in the space block corresponding to the current to-be-decoded node. L is a natural number.

Optionally, the decoding mode of the current to-be-decoded node includes a decoding mode of the isolated point or a decoding mode of an occupancy code. In a case that the current to-be-decoded node meets the decoding condition of the isolated point, the decoding mode of the current to-be-decoded node is the isolated point decoding mode. In a case that the current to-be-decoded node does not meet the decoding condition of the isolated point, the decoding mode of the current to-be-decoded node is the decoding mode of the occupancy code.

Optionally, in a case that the decoding mode of the current to-be-decoded node is the isolated point decoding mode, the method further includes:
performing occupancy code decoding in a case that the current to-be-decoded node is a non-isolated node; and
performing isolated point decoding in a case that the current to-be-decoded node is an isolated node.

It should be noted that, this embodiment serves as an implementation of a decoding side corresponding to the embodiment shown in FIG. 4. A decoding process is an inverse process of an encoding process. Specific implementations may refer to related descriptions of the embodiment shown in FIG. 4, and same beneficial effect can be achieved. To avoid repetition, details are not described herein again.

It should be noted that, in the point cloud encoding processing method according to the embodiment of this application, an execution body may be a point cloud encoding processing apparatus, or a control module in the point cloud encoding processing apparatus configured to perform the point cloud encoding processing method. In an embodiment of this application, an example in which the point cloud encoding processing apparatus performs the point cloud encoding processing method is used to describe a point cloud encoding processing apparatus according to the embodiment of this application.

Refer to FIG. 7. FIG. 7 is a diagram of a structure of a point cloud encoding processing apparatus according to an embodiment of this application. As shown in FIG. 7, a point cloud encoding processing apparatus 700 includes:
a first obtaining module 701, configured to obtain a current to-be-encoded node in a target queue, where the target queue includes an occupied node in a space block corresponding to a constructed tree structure based on first geometric information, the first geometric information is obtained by preprocessing based on geometric information of a to-be-encoded N-th frame point cloud, and N is an integer greater than 1; and
a first determining module 702, configured to determine, based on whether the current to-be-encoded node meets an encoding condition of an isolated point, an encoding mode of the current to-be-encoded node.

The encoding condition of the isolated point includes: An occupancy status of a target node meets a preset condition. The target node is a node that is in encoded nodes and that is associated with the current to-be-encoded node.

Optionally, the target node includes at least one of the following:
a subnode of a first node, where the first node is a node that is in a tree structure corresponding to second geometric information and that corresponds to the current to-be-encoded node, and the second geometric information is reconstructed geometric information of a reference frame point cloud corresponding to the N-th frame point cloud;
a neighboring node of the first node; and
a subnode of the neighboring node of the first node.

Optionally, the neighboring node of the first node includes at least one of the following:
a node at a same layer as the first node; and
a subnode of a node that is at a same layer as and that corresponds to a parent node of the first node.

Optionally, that the occupancy status of the target node meets the preset condition includes at least one of the following that:
a quantity of target nodes that are occupied is less than a first threshold; and
a quantity of points that are in second geometric information and that are located in a space block corresponding to the target node is less than a second threshold. The second geometric information is reconstructed geometric information of a reference frame point cloud corresponding to the N-th frame point cloud.

Optionally, the encoding condition of the isolated point further includes that:

A direct encoding identifier of geometric header information corresponding to the N-th frame point cloud is a preset value.

In a case that side lengths that are in L directions and that are of a space block corresponding to the current to-be-encoded node are greater than a preset minimum side length, a sum of to-be-encoded Morton code bits of a target point is greater than preset times of L. The target point includes a point that is in the first geometric information and that is located in the space block corresponding to the current to-be-encoded node. L is a natural number.

Optionally, the encoding mode of the current to-be-encoded node includes an encoding mode of the isolated point or an encoding mode of an occupancy code, and in a case that the current to-be-encoded node meets the encoding condition of the isolated point, the encoding mode of the current to-be-encoded node is the isolated point encoding mode. In a case that the current to-be-encoded node does not meet the encoding condition of the isolated point, the encoding mode of the current to-be-encoded node is the encoding mode of the occupancy code.

Optionally, the point cloud encoding processing apparatus further includes a first performing module. The first performing module is configured to perform, in a case that the encoding mode of the current to-be-encoded node is the isolated point encoding mode, the following operations:
performing occupancy code encoding in a case that the current to-be-encoded node is a non-isolated node; and
performing isolated point encoding in a case that the current to-be-encoded node is an isolated node.

The point cloud encoding processing apparatus according to the embodiment of this application can implement processes of the method embodiment in FIG. 4. To avoid repetition, details are not described herein again.

It should be noted that, in the point cloud decoding processing method according to the embodiment of this application, an execution body may be a point cloud decoding processing apparatus, or a control module in the point cloud decoding processing apparatus configured to perform the point cloud decoding processing method. In an embodiment of this application, an example in which the point cloud decoding processing apparatus performs the point cloud decoding processing method is used to describe a point cloud decoding processing apparatus according to the embodiment of this application.

Refer to FIG. 8. FIG. 8 is a diagram of a structure of a point cloud decoding processing apparatus according to an embodiment of this application. As shown in FIG. 8, a point cloud decoding processing apparatus 800 includes:
a second obtaining module 801, configured to obtain a current to-be-decoded node in a target queue, where the target queue includes an occupied node in a space block corresponding to a constructed tree structure based on first geometric information, the first geometric information is geometric information corresponding to decoded nodes of a to-be-decoded N-th frame point cloud, and N is an integer greater than 1; and
a second determining module 802, configured to determine, based on whether the current to-be-decoded node meets a decoding condition of an isolated point, a decoding mode of the current to-be-decoded node.

The decoding condition of the isolated point includes: An occupancy status of a target node meets a preset condition. The target node is a node that is in the decoded nodes and that is associated with the current to-be-decoded node.

Optionally, the target node includes at least one of the following:
a subnode of a first node, where the first node is a node that is in a tree structure corresponding to second geometric information and that corresponds to the current to-be-decoded node, and the second geometric information is reconstructed geometric information of a reference frame point cloud corresponding to the N-th frame point cloud;
a neighboring node of the first node; and
a subnode of the neighboring node of the first node.

Optionally, the neighboring node of the first node includes at least one of the following:
a node at a same layer as the first node; and
a subnode of a node that is at a same layer as and that corresponds to a parent node of the first node.

Optionally, that the occupancy status of the target node meets the preset condition includes at least one of the following that:
a quantity of target nodes that are occupied is less than a first threshold; and
a quantity of points that are in second geometric information and that are located in a space block corresponding to the target node is less than a second threshold. The second geometric information is reconstructed geometric information of a reference frame point cloud corresponding to the N-th frame point cloud.

Optionally, the decoding condition of the isolated point further includes that:
A direct decoding identifier of geometric header information corresponding to the N-th frame point cloud is a preset value.

In a case that side lengths that are in L directions and that are of a space block corresponding to the current to-be-decoded node are greater than a preset minimum side length, a sum of to-be-decoded Morton code bits of a target point is greater than preset times of L. The target point includes a point that is in the first geometric information and that is located in the space block corresponding to the current to-be-decoded node. L is a natural number.

Optionally, the decoding mode of the current to-be-decoded node includes a decoding mode of the isolated point or a decoding mode of an occupancy code. In a case that the current to-be-decoded node meets the decoding condition of the isolated point, the decoding mode of the current to-be-decoded node is the isolated point decoding mode. In a case that the current to-be-decoded node does not meet the decoding condition of the isolated point, the decoding mode of the current to-be-decoded node is the decoding mode of the occupancy code.

Optionally, the point cloud encoding processing apparatus further includes a first performing module. The first performing module is configured to perform, in a case that the decoding mode of the current to-be-decoded node is the isolated point decoding mode, the following operations:
performing occupancy code decoding in a case that the current to-be-decoded node is a non-isolated node; and
performing isolated point decoding in a case that the current to-be-decoded node is an isolated node.

The point cloud decoding processing apparatus according to the embodiment of this application can implement processes of the method embodiment in FIG. 4. To avoid repetition, details are not described herein again.

The point cloud decoding processing apparatus in the embodiment of this application may be an apparatus, an apparatus or electronic device with an operating system, or may be a component, an integrated circuit, or a chip in a terminal. The apparatus may be a mobile terminal or a non-mobile terminal. For example, the mobile terminal may include but not limited to the types of terminals listed above. The non-mobile terminal may be a server, a network attached storage (Network Attached Storage, NAS), a personal computer (personal computer, PC), a television (television, TV), a teller machine, a self-service machine, or the like. This is not specifically limited in the embodiment of this application.

The point cloud encoding processing apparatus and the point cloud decoding processing apparatus according to the embodiments of this application can implement processes implemented by method embodiments in FIG. 4 to FIG. 6, and same technical effects can be achieved. To avoid repetition, details are not described herein again.

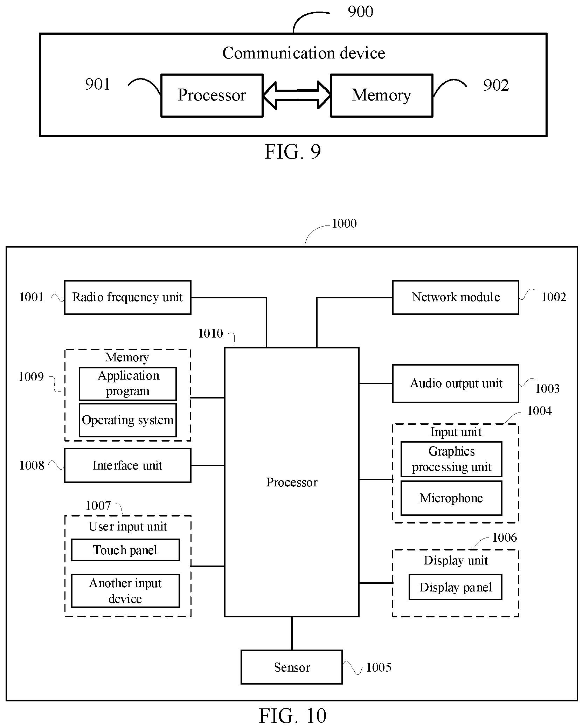

Optionally, as shown in FIG. 9, an embodiment of this application further provides a communication device 900, including a processor 901, a memory 902, and a program or instructions stored in the memory 902 and executable on the processor 901. For example, when the program or the instructions are executed by the processor 901, processes of the embodiments of the point cloud geometric information encoding processing method and point cloud geometric information decoding processing method are implemented, and same technical effects can be achieved. To avoid repetition, details are not described herein again.

An embodiment of this application further provides a terminal, including a processor and a communication interface. The processor is configured to perform the following operations: obtaining a current to-be-encoded node in a target queue, where the target queue includes an occupied node in a space block corresponding to a constructed tree structure based on first geometric information, the first geometric information is obtained by preprocessing based on geometric information of a to-be-encoded N-th frame point cloud, and N is an integer greater than 1; and determining an encoding mode of the current to-be-encoded node based on whether the current to-be-encoded node meets an encoding condition of an isolated point. The encoding condition of the isolated point includes: An occupancy status of a target node meets a preset condition. The target node is a node that is in encoded nodes and that is associated with the current to-be-encoded node. Alternatively, the processor is configured to perform the following operations: obtaining a current to-be-decoded node in a target queue, where the target queue includes an occupied node in a space block corresponding to a constructed tree structure based on first geometric information, the first geometric information is geometric information corresponding to decoded nodes of a to-be-decoded N-th frame point cloud, and N is an integer greater than 1; and determining a decoding mode of the current to-be-decoded node based on whether the current to-be-decoded node meets a decoding condition of an isolated point. The decoding condition of the isolated point includes: An occupancy status of a target node meets a preset condition. The target node is a node that is in the decoded nodes and that is associated with the current to-be-decoded node. The terminal embodiment is corresponding to the foregoing terminal-side method embodiment. The implementing processes and the implementations of the foregoing method embodiments may all be applicable to the terminal embodiment, and same technical effects can be achieved. Specifically, FIG. 10 is a schematic diagram of a hardware structure of a terminal according to various embodiments of this application.

The terminal 1000 includes but is not limited to at least some components in: a radio frequency unit 1001, a network module 1002, an audio output unit 1003, an input unit 1004, a sensor 1005, a display unit 1006, a user input unit 1007, an interface unit 1008, a memory 1009, a processor 1010, and the like.

A person skilled in the art may understand that the terminal 1000 may further include a power supply (such as a battery) for supplying power to the components. The power supply may be logically connected to the processor 1010 by using a power management system, to implement functions such as charging, discharging, and power consumption management by using the power management system. The terminal structure shown in FIG. 10 does not constitute a limitation to the terminal, and the terminal may include more or fewer components than those shown in the figure, or some components may be combined, or the components may be arranged in a different manner. Details are not described herein again.

It should be understood that, in the embodiment of this application, the input unit 1004 may include a graphics processing unit (Graphics Processing Unit, GPU) and a microphone. The graphics processing unit process image data of a static picture or a video that is obtained by an image capture apparatus (for example, a camera) in a video capture mode or an image capture mode. The display unit 1006 may include a display panel. The display panel may be configured in a form of a liquid crystal display, an organic light-emitting diode, or the like. The user input unit 1007 includes a touch panel and another input device. The touch panel may also be referred to as a touch screen. The touch panel may include two parts: a touch detection apparatus and a touch controller. The another input device may include but not limited to a physical keyboard, a functional key (such as a volume control key or an on/off key), a trackball, a mouse, or a joystick. Details are not described herein again.

In the embodiment of this application, after the radio frequency unit 1001 receives downlink data from a network-side device, the downlink data is processed by the processor 1010. In addition, uplink data is sent to the network-side device. Usually, the radio frequency unit 1001 includes but is not limited to an antenna, at least one amplifier, a transceiver, a coupler, a low noise amplifier, a duplexer, and the like.

The memory 1009 may be configured to store a software program or instructions and various data. The memory 1009 may mainly include a program or instructions storage area and a data storage area. The program or instructions storage area may store an operating system, an application program or instructions needed by at least one function (for example, a sound playback function and an image display function), and the like. In addition, the memory 1009 may include a high-speed random access memory, and may also include a non-transient memory. The non-transient memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one magnetic disk storage device, a flash memory, or another non-transient solid-state storage device.

The processor 1010 may include one or more processing units. Optionally, the processor 1010 may integrate an application processor and a modem processor. The application processor mainly processes an operating system, a user interface, an application program or instructions, and the like. The modem processor mainly processes wireless communication, such as a baseband processor. It may be understood that the foregoing modem processor may not be integrated into the processor 1010.

The processor 1010 is further configured to perform the following operations:
obtaining a current to-be-encoded node in a target queue, where the target queue includes an occupied node in a space block corresponding to a constructed tree structure based on first geometric information, the first geometric information is obtained by preprocessing based on geometric information of a to-be-encoded N-th frame point cloud, and N is an integer greater than 1; and
determining an encoding mode of the current to-be-encoded node based on whether the current to-be-encoded node meets an encoding condition of an isolated point.

The encoding condition of the isolated point includes: An occupancy status of a target node meets a preset condition. The target node is a node that is in encoded nodes and that is associated with the current to-be-encoded node.

Alternatively, the processor 1010 is further configured to perform the following operations:
obtaining a current to-be-decoded node in a target queue, where the target queue includes an occupied node in a space block corresponding to a constructed tree structure based on first geometric information, the first geometric information is geometric information corresponding to decoded nodes of a to-be-decoded N-th frame point cloud, and N is an integer greater than 1; and
determining a decoding mode of the current to-be-decoded node based on whether the current to-be-decoded node meets a decoding condition of an isolated point.

The decoding condition of the isolated point includes: An occupancy status of a target node meets a preset condition. The target node is a node that is in the decoded nodes and that is associated with the current to-be-decoded node.

It should be understood that in this embodiment, the processor 1010 can implement processes implemented by the method embodiments in FIG. 4 and FIG. 6. To avoid repetition, details are not described herein again.

An embodiment of this application further provide a readable storage medium. The readable storage medium stores a program or instructions. When the computer program or the instructions are executed by a processor, processes of the embodiments of the foregoing point cloud encoding processing method or point cloud decoding processing method are implemented, and same technical effects can be achieved. To avoid repetition, details are not described herein again.

The processor is the processor of the electronic device in the foregoing embodiments. The readable storage medium includes a computer-readable storage medium, for example, a computer read-only memory (Read-Only Memory, ROM), a random access memory (Random Access Memory, RAM), a magnetic disk, or an optical disc.

An embodiment of this application further provide a computer program product. The computer program product is stored in a non-transient storage medium. The computer program product is executed by at least one processor to implement processes of the embodiments of the foregoing point cloud encoding processing method or point cloud decoding processing method, and same technical effects can be achieved. To avoid repetition, details are not described herein again.

An embodiment of this application further provides a chip. The chip includes a processor and a communication interface. The communication interface is coupled to the processor. The processor is configured to run a program or instructions to implement processes of the embodiments of the foregoing point cloud encoding processing method or point cloud decoding processing method, and same technical effects can be achieved. To avoid repetition, details are not described herein again.

It should be understood that, the chip mentioned in the embodiment of this application may also be referred to as a system-on-chip, a system chip, a chip system, a system-on-a-chip, or the like.

An embodiment of this application further provides a program product. The program product is stored in a non-transient storage medium. The program product is executed by at least one processor to implement processes of the embodiments of the foregoing point cloud encoding processing method or point cloud decoding processing method, and same technical effects can be achieved. To avoid repetition, details are not described herein again.

It should be noted that, in this specification, the terms "include", "comprise", or any other variation thereof is intended to cover a non-exclusive inclusion, so that a process, a method, an article, or an apparatus that includes a series of elements not only includes such elements, but also includes other elements not expressly listed, or further includes elements inherent to such process, method, product, or apparatus. In the absence of more restrictions, an elements defined by the statement "include a/an..." does not exclude other same elements existing in the process, method, object, or apparatus which includes the element. In addition, it should be noted that the scope of the method and apparatus in the embodiments of this application is not limited to performing functions in the order shown or discussed, but may also include performing the functions in a basically simultaneous manner or in reverse order depending on the function involved. For example, the methods described may be performed in an order different from the described order, and various steps may be added, omitted, or combined. In addition, features described with reference to some examples may be combined in other examples.

Based on the descriptions in the foregoing implementations, a person skilled in the art may clearly understand that the method in the foregoing embodiments may be implemented by software and a necessary universal hardware platform or by using hardware. However, in most circumstances, the former is a preferred implementation the former is a preferred implementation. Based on such an understanding, the technical solutions of this application essentially or a part contributing to conventional technologies may be implemented in a form of a computer software product. The computer software product is stored in a storage medium (such as a ROM/RAM, a magnetic disk, or an optical disc) and includes several instructions for instructing a terminal (which may be a mobile phone, a computer, a server, an air conditioner, a base station, or the like) to perform the methods described in the embodiments of this application.

The embodiments of this application are described above with reference to the accompanying drawings. However, this application is not limited to the specific implementations described above, and the specific implementations described above are merely examples and are not restrictive. A person of ordinary skills in the art may make various forms under the teaching of this application without departing from aims and the protection scope of claims of this application, all of which fall within the protection scope of this application.

## Claims

1. A point cloud encoding processing method, comprising:
obtaining a current to-be-encoded node in a target queue, wherein the target queue comprises an occupied node in a space block corresponding to a constructed tree structure based on first geometric information, the first geometric information is obtained by preprocessing based on geometric information of a to-be-encoded N-th frame point cloud, and N is an integer greater than 1; and
determining an encoding mode of the current to-be-encoded node based on whether the current to-be-encoded node meets an encoding condition of an isolated point, wherein
the encoding condition of the isolated point comprises: an occupancy status of a target node meets a preset condition, and the target node is a node that is in encoded nodes and that is associated with the current to-be-encoded node.

2. The method according to claim 1, wherein the target node comprises at least one of following:
a subnode of a first node, wherein the first node is a node that is in a tree structure corresponding to second geometric information and that corresponds to the current to-be-encoded node, and the second geometric information is reconstructed geometric information of a reference frame point cloud corresponding to the N-th frame point cloud;
a neighboring node of the first node; and
a subnode of the neighboring node of the first node.

3. The method according to claim 2, wherein the neighboring node of the first node comprises at least one of following:
a node at a same layer as the first node; and
a subnode of a node that is at a same layer as and that corresponds to a parent node of the first node.

4. The method according to claim 1, wherein that the occupancy status of the target node meets the preset condition comprises at least one of following that:
a quantity of target nodes that are occupied is less than a first threshold; and
a quantity of points that are in second geometric information and that are located in a space block corresponding to the target node is less than a second threshold, wherein the second geometric information is reconstructed geometric information of a reference frame point cloud corresponding to the N-th frame point cloud.

5. The method according to claim 1, wherein the encoding condition of the isolated point further comprises that:
a direct encoding identifier of geometric header information corresponding to the N-th frame point cloud is a preset value; and
in a case that side lengths that are in L directions and that are of a space block corresponding to the current to-be-encoded node are greater than a preset minimum side length, a sum of to-be-encoded Morton code bits of a target point is greater than preset times of L, wherein the target point comprises a point that is in the first geometric information and that is located in the space block corresponding to the current to-be-encoded node, and L is a natural number.

6. The method according to claim 1, wherein the encoding mode of the current to-be-encoded node comprises an encoding mode of the isolated point or an encoding mode of an occupancy code, and in a case that the current to-be-encoded node meets the encoding condition of the isolated point, the encoding mode of the current to-be-encoded node is the encoding mode of the isolated point; and in a case that the current to-be-encoded node does not meet the encoding condition of the isolated point, the encoding mode of the current to-be-encoded node is the encoding mode of the occupancy code.

7. The method according to claim 6, wherein in a case that the encoding mode of the current to-be-encoded node is the encoding mode of the isolated point, the method further comprises:
performing occupancy code encoding in a case that the current to-be-encoded node is a non-isolated node; and
performing isolated point encoding in a case that the current to-be-encoded node is an isolated node.

8. A point cloud decoding processing method, comprising:
obtaining a current to-be-decoded node in a target queue, wherein the target queue comprises an occupied node in a space block corresponding to a constructed tree structure based on first geometric information, the first geometric information is geometric information corresponding to decoded nodes of a to-be-decoded N-th frame point cloud, and N is an integer greater than 1; and
determining a decoding mode of the current to-be-decoded node based on whether the current to-be-decoded node meets a decoding condition of an isolated point, wherein
the decoding condition of the isolated point comprises: an occupancy status of a target node meets a preset condition, and the target node is a node that is in the decoded nodes and that is associated with the current to-be-decoded node.

9. The method according to claim 8, wherein the target node comprises at least one of following:
a subnode of a first node, wherein the first node is a node that is in a tree structure corresponding to second geometric information and that corresponds to the current to-be-decoded node, and the second geometric information is reconstructed geometric information of a reference frame point cloud corresponding to the N-th frame point cloud;
a neighboring node of the first node; and
a subnode of the neighboring node of the first node.

10. The method according to claim 9, wherein the neighboring node of the first node comprises at least one of following:
a node at a same layer as the first node; and
a subnode of a node that is at a same layer as and that corresponds to a parent node of the first node.

11. The method according to claim 8, wherein that the occupancy status of the target node meets the preset condition comprises at least one of following that:
a quantity of target nodes that are occupied is less than a first threshold; and
a quantity of points that are in second geometric information and that are located in a space block corresponding to the target node is less than a second threshold, wherein the second geometric information is reconstructed geometric information of a reference frame point cloud corresponding to the N-th frame point cloud.

12. The method according to claim 8, wherein the decoding condition of the isolated point further comprises that:
a direct decoding identifier of geometric header information corresponding to the N-th frame point cloud is a preset value; and
in a case that side lengths that are in L directions and that are of a space block corresponding to the current to-be-decoded node are greater than a preset minimum side length, a sum of to-be-decoded Morton code bits of a target point is greater than preset times of L, wherein the target point comprises a point that is in the first geometric information and that is located in the space block corresponding to the current to-be-decoded node, and L is a natural number.

13. The method according to claim 8, wherein the decoding mode of the current to-be-decoded node comprises a decoding mode of the isolated point or a decoding mode of an occupancy code, and in a case that the current to-be-decoded node meets the decoding condition of the isolated point, the decoding mode of the current to-be-decoded node is the decoding mode of the isolated point; and in a case that the current to-be-decoded node does not meet the decoding condition of the isolated point, the decoding mode of the current to-be-decoded node is the decoding mode of the occupancy code.

14. The method according to claim 13, wherein in a case that the decoding mode of the current to-be-decoded node is the decoding mode of the isolated point, the method further comprises:
performing occupancy code decoding in a case that the current to-be-decoded node is a non-isolated node; and
performing isolated point decoding in a case that the current to-be-decoded node is an isolated node.

15. A point cloud encoding processing apparatus, comprising:
a first obtaining module, configured to obtain a current to-be-encoded node in a target queue, wherein the target queue comprises an occupied node in a space block corresponding to a constructed tree structure based on first geometric information, the first geometric information is obtained by preprocessing based on geometric information of a to-be-encoded N-th frame point cloud, and N is an integer greater than 1; and
a first determining module, configured to determine, based on whether the current to-be-encoded node meets an encoding condition of an isolated point, an encoding mode of the current to-be-encoded node; and
the encoding condition of the isolated point comprises: an occupancy status of a target node meets a preset condition, and the target node is a node that is in encoded nodes and that is associated with the current to-be-encoded node.

16. The apparatus according to claim 15, wherein the target node comprises at least one of following:
a subnode of a first node, wherein the first node is a node that is in a tree structure corresponding to second geometric information and that corresponds to the current to-be-encoded node, and the second geometric information is reconstructed geometric information of a reference frame point cloud corresponding to the N-th frame point cloud;
a neighboring node of the first node; and
a subnode of the neighboring node of the first node.

17. The apparatus according to claim 16, wherein the neighboring node of the first node comprises at least one of following:
a node at a same layer as the first node; and
a subnode of a node that is at a same layer as and that corresponds to a parent node of the first node.

18. The apparatus according to claim 15, wherein that the occupancy status of the target node meets the preset condition comprises at least one of following that:
a quantity of target nodes that are occupied is less than a first threshold; and
a quantity of points that are in second geometric information and that are located in a space block corresponding to the target node is less than a second threshold, wherein the second geometric information is reconstructed geometric information of a reference frame point cloud corresponding to the N-th frame point cloud.

19. A point cloud decoding processing apparatus, comprising:
a second obtaining module, configured to obtain a current to-be-decoded node in a target queue, wherein the target queue comprises an occupied node in a space block corresponding to a constructed tree structure based on first geometric information, the first geometric information is geometric information corresponding to decoded nodes of a to-be-decoded N-th frame point cloud, and N is an integer greater than 1; and
a second determining module, configured to determine, based on whether the current to-be-decoded node meets a decoding condition of an isolated point, a decoding mode of the current to-be-decoded node, wherein
the decoding condition of the isolated point comprises: an occupancy status of a target node meets a preset condition, and the target node is a node that is in the decoded nodes and that is associated with the current to-be-decoded node.

20. The apparatus according to claim 19, wherein the target node comprises at least one of following:
a subnode of a first node, wherein the first node is a node that is in a tree structure corresponding to second geometric information and that corresponds to the current to-be-decoded node, and the second geometric information is reconstructed geometric information of a reference frame point cloud corresponding to the N-th frame point cloud;
a neighboring node of the first node; and
a subnode of the neighboring node of the first node.

21. The apparatus according to claim 20, wherein the neighboring node of the first node comprises at least one of following:
a node at a same layer as the first node; and
a subnode of a node that is at a same layer as and that corresponds to a parent node of the first node.

22. The apparatus according to claim 19, wherein that the occupancy status of the target node meets the preset condition comprises at least one of following that:
a quantity of target nodes that are occupied is less than a first threshold; and
a quantity of points that are in second geometric information and that are located in a space block corresponding to the target node is less than a second threshold, wherein the second geometric information is reconstructed geometric information of a reference frame point cloud corresponding to the N-th frame point cloud.

23. A terminal, comprising a memory, a processor, and a program stored in the memory and executable on the processor, wherein when the program is executed by the processor, steps of the point cloud encoding processing method according to any one of claims 1 to 7 are implemented; or when the program is executed by the processor, steps of the point cloud decoding processing method according to any one of claims 8 to 14 are implemented.

24. A computer-readable storage medium, wherein the computer-readable storage medium stores a computer program or instructions, and when the program is executed by a processor, steps of the point cloud encoding processing method according to any one of claims 1 to 7 are implemented; or when the program is executed by a processor, steps of the point cloud decoding processing method according to any one of claims 8 to 14 are implemented.

25. A chip, comprising a processor and a communication interface, wherein the communication interface is coupled to the processor, and the processor is configured to run a program or instructions to implement steps of the point cloud encoding processing method according to any one of claims 1 to 7, or steps of the point cloud decoding processing method according to any one of claims 8 to 14.

26. A computer program product, wherein the computer program product is stored in a non-transient readable storage medium, and the computer program product is configured to be executed by at least one processor to implement steps of the point cloud encoding processing method according to any one of claims 1 to 7, or steps of the point cloud decoding processing method according to any one of claims 8 to 14.

27. A communication device, configured to implement steps of the point cloud encoding processing method according to any one of claims 1 to 7, or steps of the point cloud decoding processing method according to any one of claims 8 to 14.
